# EUROPÄISCHE PATENTSCHRIFT

(11) **EP 3 182 831 B1**
(45) Veröffentlichungstag und Bekanntmachung des Hinweises auf die Patenterteilung: **26.06.2019**
(21) Anmeldenummer: 14753278.2
(22) Anmeldetag: 22.08.2014
(51) Int. Cl.: A22B 3/08, A22B 1/00

(54) **FISCH-BETÄUBUNGSVORRICHTUNG, TRIGGERBAUEINHEIT SOWIE VERFAHREN ZUM AUSLÖSEN DES BETÄUBUNGSMITTELS DER FISCH-BETÄUBUNGSVORRICHTUNG**
DEVICE FOR STUNNING FISH, TRIGGER UNIT AND METHOD FOR RELEASING THE STRIKER OF THE STUNNING DEVICE
DISPOSITIF POUR ÉTOURDIR DES POISSONS, UNITÉ DE DE DÉCLENCHEMENT ET PROCÉDÉ DE DÉVERROUILLAGE DU PERCUTEUR DU DISPOSITIF POUR ÉTOURDIR DES POISSONS

(43) Veröffentlichungstag der Anmeldung: 28.06.2017
(73) Patentinhaber: Nordischer Maschinenbau Rud. Baader GmbH + Co. KG, 23560 Lübeck (DE)
(72) Erfinder: KING, Graeme Neville, Cleveland, Queensland 4163 (AU)
(74) Vertreter: Stork Bamberger Patentanwälte PartmbB
(86) Internationale Anmeldenummer: PCT/EP2014/067946
(87) Internationale Veröffentlichungsnummer: WO 2016/026540

(56) Entgegenhaltungen:
- WO-A1-2011/021071
- CA-A1- 2 863 817
- GB-A- 2 391 446
- US-A- 6 001 011
- US-A1- 2010 178 859

## Beschreibung

Die Erfindung betrifft eine Fisch-Betäubungsvorrichtung, umfassend eine Fisch-Zuführeinrichtung, die zur Kopfvoraus-Förderung von Fisch eingerichtet ist, einen von der Fisch-Zuführeinrichtung mit Fisch in Kopfvoraus-Lage beschickbaren Fisch-Aufnahmeraum, eine Fisch-Positioniereinrichtung mit einem am Fischkopf angreifenden Fisch-Positionierungsmittel, das in dem Fisch-Aufnahmeraum zum Betäuben des Fisches eine temporäre Stoppposition des Fisches bestimmt, die nach dem Betäuben zur Abgabe des Fisches freigebbar ist, ein Betäubungsmittel, das zum Betäuben auf den kopfseitigen Bereich des Fisches in seiner temporären Stoppposition in dem Fisch-Aufnahmeraum einwirkt, eine Triggereinrichtung, mittels der die temporäre Stoppposition feststellbar und der Betrieb des Betäubungsmittels zum Einwirken auf den kopfseitigen Fischbereich auslösbar ist, und eine Vorrichtungs-Steuereinrichtung, die zur Betriebssteuerung mit der Fisch-Positioniereinrichtung, dem Betäubungsmittel und der Triggereinrichtung wirkverbunden ist.

Die Erfindung bezieht sich auch auf eine zum Einbau in die Fisch-Betäubungsvorrichtung gestaltete Triggerbaueinheit sowie auf ein Verfahren zum Auslösen eines Betäubungsmittels einer Fisch-Betäubungsvorrichtung.

US 6 001 011 A offenbart eine Fisch-Betäubungsvorrichtung der genannten Art, wobei die Fisch-Positioniereinrichtung mit einer die Fischgröße erfassenden Fischgrößen-Erfassungseinrichtung sowie mit einem mittels der Fischgrößen-Erfassungseinrichtung steuerbaren Fisch-Positionsstellglied eingerichtet ist, das zum örtlichen Verstellen des Fisch-Positionierungsmittels mit diesem verbunden ist, wodurch zum Herbeiführen der temporären Fisch-Stoppposition jeder Fischkopf nach Maßgabe der Fischgröße in eine in Bezug auf das Betäubungsmittel einheitliche Position selbsttätig bewegbar ist. US 6 001 011 A sieht als Fisch-Positionsstellglied eine Lagerplatte vor, die zum gesteuerten Positionieren in Abhängigkeit von der Fischgröße an einem Vorrichtungsrahmen verlagerbar und feststellbar ist. Zwischen der Lagerplatte und den Fischkopf aufnehmenden Lagebestimmungsplatten, die Bestandteil des Positionierungsmittels sind, ist eine an der Lagerplatte befestigte, die Lagebestimmungsplatten lagernde Triggereinrichtung angeordnet. Die Lagerplatte, die Triggereinrichtung und die Lagebestimmungsplatten sind zum gesteuerten Positionieren nur gemeinsam verlagerbar.

Aus EP 1 908 353 A1 ist eine Fisch-Betäubungsvorrichtung bekannt, derart, dass Fische einzeln aufeinanderfolgend längs der Fisch-Zuführeinrichtung zugeführt werden, wobei jeder Fisch in Bauchlage und mit seinem Kopf voraus in einen Fisch-Aufnahmeraum gelangt. Dort befindet sich ein verschieblich gelagertes Positionier- und Trigger-Anschlagelement einer Triggereinrichtung. Der Fischkopf schlägt unter dem Eigengewicht des Fisches gegen das Trigger-Anschlagelement an, das dadurch längs eines Auslösewegs bewegt wird und dadurch den Betrieb eines mechanischen Betäubungsmittels auslöst, nämlich einen Schlagbolzen oder dergleichen Betäubungswerkzeug, das auf den Schädel des Fischkopfes trifft, um den Fisch zu betäuben. Das Betäubungswerkzeug ist zwischen einer zurückgezogenen Position und einer ausgefahrenen, nämlich der Schlagposition bewegbar. Die Triggereinrichtung und das Betäubungsmittel sind mit einer Steuereinrichtung, nämlich einer pneumatischen Schaltung verbunden. Diese ist auch mit einem weiteren Positionierelement verbunden, das zum Halten des Fisches sowie zum Freigeben des Fisches nach Abschluss der Betäubung gesteuert wird. Die Fische passieren die Fisch-Betäubungsvorrichtung mit einem Wasserstrom, um die Betäubungsvorrichtung zu passieren. Allgemein sind Fisch-Betäubungsvorrichtungen mit Mitteln zum Positionieren eines Fisches zum Schlachten auch aus CA 2 863 817 A1, US 2010/178859 A1 und WO 2011/021071 A1 bekannt.

Aus WO 2012/020283 A1 ist eine Fisch-Betäubungsvorrichtung bekannt, die mit einem mechanischem Betäubungsmittel, nämlich einem Schlagwerkzeug ausgestattet ist, dessen Position in Abhängigkeit von der Fischgröße veränderbar ist. Eine solche bekannte Vorrichtung erfordert Mittel zum mechanischen Messen und Steuern der Position des Betäubungsmittels. Die Vorrichtung baut aufwändig, und die Positionierung des Betäubungsmittels ist nicht zufriedenstellend.

Aus GB 2 391 446 A ist eine Fisch-Betäubungsvorrichtung bekannt, die eine Einrichtung zum Bestimmen der Kopfposition in Bezug auf die Längsrichtung der Betäubungsvorrichtung aufweist. Der Fisch wird kontinuierlich gefördert, wobei eine Steuervorrichtung den Zeitpunkt zum Auslösen des Betäubungsmittels berechnet und einen Betäubungsschlag an der Stelle der berechneten Position des Fisches auslöst. Diese bekannte Fisch-Betäubungsvorrichtung muss mit kontinuierlich geförderten Fischen betrieben werden, und der Auslösezeitpunkt des Betäubungs-Werkzeugs erfordert einen besonderen Berechnungs-Algorithmus.

Der Erfindung liegt die Aufgabe zugrunde, die Betäubung des in den Fisch-Aufnahmeraum der gattungsgemäßen Vorrichtung eingeführten Fisches derart zu verbessern, dass Stellen am Fischkopf zum Einwirken des Betäubungsmittels, die in der Bearbeitungsposition des Fisches in Abhängigkeit von seiner Kopf- und/oder Körpergröße zu liegen kommen, mit einfachen Mitteln zum Betäuben optimal positioniert werden. Der automatische Betrieb der Fisch-Betäubungseinrichtung soll nicht durch manuelle Einstellarbeit unterbrochen werden. Insbesondere sollen die Fische von dem automatisch betriebenen Positionierungsmittel zuverlässig freikommen.

Die Ziele werden erfindungsgemäß mit einer Vorrichtung gemäß Anspruch 1 und einem Verfahren gemäß Anspruch 20 erreicht. Eine erfindungsgemäße Triggerbaueinheit ist zum Einbau in eine Fisch-Betäubungsvorrichtung nach einem der Ansprüche 1 bis 14 eingerichtet.

Erfindungsgemäß bildet das Positionsstellglied einen Bestandteil der Triggereinrichtung, wobei die Triggereinrichtung in Abhängigkeit von an an der Triggereinrichtung verlagerbaren und festsetzbaren Ortspositionen des Positionsstellgliedes auslösbar ist, die mittels der Fischgrößensteuerung steuerbar, vorzugsweise stufenlos steuerbar, sind. Die Triggereinrichtung wird in Abhängigkeit von der gesteuerten und damit voreingestellten Position des Positioniermittels zum Auslösen des Betäubungsmittels unmittelbar betätigt. Das steuerbare Positioniermittel wird mittels des Fisch-Positionsstellgliedes an einem Trigger-Körper, z. B. einem Gehäuse oder dergleichen, zur Positionseinstellung bewegbar gelagert.

Jeder Fisch wird in seiner Stoppposition in dem Fisch-Aufnahmeraum in Bezug auf das stationär angeordnete Betäubungsmittel bzw. auf wenigstens ein von diesem getragenes Betäubungs- oder Schlachtwerkzeug mit wenigstens einer definierten Einwirkungsstelle im Kopfbereich korrekt positioniert. Unter der Stopp- oder Ruheposition ist eine Bearbeitungsposition des Fisches zu verstehen, in der er in dem Fisch-Aufnahmeraum mit seinem Eigengewicht gegen ein Trigger-Anschlagelement anschlägt, das ein Positionierelement des Positioniermittels bildet und infolge des Anschlags zum Auslösen der Triggereinrichtung in die Stoppposition verlagert wird. Das Positioniermittel ist also wenigstens mit einem Element unter Anlage- oder Druckkraft verlagerbar. Zweckmäßig wird der Boden des Fisch-Aufnahmeraums durch eine Rutschfläche gebildet, die in Förderrichtung nach unten geneigt ist. Fische gelangen in Abhängigkeit von ihrer Fischgröße und somit nach Maßgabe der Fischgröße in zugehörige unterschiedliche vorgegebene Stopppositionen, derart, dass relevante bzw. zu treffende Bearbeitungs- oder Einwirkungsstellen am Kopf in Bezug auf das Betäubungsmittel bzw. auf dessen Werkzeug gleich und damit einheitlich zu liegen kommen. Erfindungsgemäß bedarf es nur einer einfachen örtlichen Verstell-Verlagerung des Fisch-Positionierungsmittels, das den Fisch-Aufnahmeraum an seiner dem Fischkopf zugewandten Seite begrenzt und in der Größe ändert. Man erreicht einen besonders zuverlässigen Vorrichtungsbetrieb, und das Betäuben bzw. Schlachten des Fisches wird mit optimaler Wirkung des Betäubungsmittels ohne Beeinträchtigung durch Änderung der Fischgröße sichergestellt. Unter der erfassbaren Fischgröße wird wenigstens ein erfassbarer Fischgrößenwert verstanden, der unmittelbar als ein Dimensionsmaß gewonnen oder von einer erfassten Geometrie des passierenden Fisches abgeleitet ist. Insbesondere wird die Körpergröße und/oder die Kopfgröße erfasst. Jeder Fisch kann zum Erfassen eines Fischgrößenwerts auch, gegebenenfalls zusätzlich mit der Dimensionsmessung, mit einer Waage gewogen werden.

Eine Gestaltung besteht darin, dass das Fisch-Positionsstellglied durch ein Verstell-Schlittenelement gebildet ist, das schiebebewegbar und in durch die Fischgrößensteuerung bestimmter Schiebeposition festsetzbar an der Triggereinrichtung gelagert ist. Ein solches Verstell-Schlittenelement lässt sich zum Beispiel einfach in einem an einem Trigger-Körper der Triggereinrichtung angeordneten Gleitlager aufnehmen und bewegen. Vorteilhaft wird das Schlittenelement durch einen Gleitblock aus gleitfähigem Material, z. B. aus einem Acetyl-Kunststoff gebildet.

Gemäß der Erfindung ist an der Triggereinrichtung ein einen Antrieb des Fisch-Positionsstellgliedes bildender Stellglied-Aktuator angeordnet, der zum Antrieb und Feststellen des Fisch-Positionsstellgliedes nach Maßgabe der Fischgröße steuerbar ist. Ein solcher Stellglied-Aktuator wird räumlich zwischen einem Trigger-Körper und dem daran gelagerten Fisch-Positionsstellglied angeordnet. Der Stellglied-Aktuator ist in jedem Fall derart ausgebildet und eingerichtet, dass er mittels eines Steuersignals, das von der Fischgrößen-Erfassungseinrichtung direkt oder mittelbar über eine Steuereinrichtung der Fisch-Betäubungsvorrichtung abgegeben wird, in durch die Steuerung vorgegebene Position bewegbar ist und in dieser gehalten, also festgesetzt wird. Vorteilhaft ist der Stellglied-Aktuator durch einen steuerbaren Drucckolbenzylinder gebildet. Zweckmäßig wird die Kolbenstange eines solchen Druckkolbenzylinders, der vorteilhaft als Pneumatikzylinder ausgeführt ist, an dem Trigger-Körper der Triggereinrichtung gelagert, während das Fisch-Positionsstellglied in Eingriff mit dem Zylindergehäuse, zum Beispiel mittels eines Mitnehmers wie eines Vorsprungs oder einer Schulter am Zylindergehäuse, gehalten wird.

Vorteilhaft weist die Triggereinrichtung ein Trigger-Anschlagelement auf, das ein Positionierelement des Fisch-Positionierungsmittels bildet und zum Auslösen des Betäubungsmittels aus einer Anfangsposition verlagerbar ist, wobei das Trigger-Anschlagelement mit dem Fisch-Positionsstellglied zum Verstellen in unterschiedliche Basispositionen verbunden ist. In einer Ausführung kann ein solches Trigger-Anschlagelement als Element ausgebildet sein, das durch eine Kopffläche des Fisch-Positionsstellgliedes gebildet ist. Eine andere vorteilhafte Ausführung besteht darin, dass das Trigger-Anschlagelement an dem Fisch-Positionsstellglied sowie an der Triggereinrichtung angelenkt ist. Eine besondere Gestaltung erreicht man dann dadurch, dass das Fisch-Positionierungsmittel ein mit dem Fisch-Positionsstellglied verbundenes Positionierelement aufweist, das an der Triggereinrichtung gefedert gelagert ist. Vorteilhaft ist ein jedenfalls maximaler Feder-Dämpfungsweg für sämtliche Fischgrößen gleich.

Eine Ausgestaltung besteht darin, dass an der Triggereinrichtung ein Anschlag-Aktuator angeordnet ist, der zum Antrieb eines Trigger-Anschlagelements eingerichtet ist, das bewegbar an dem Fisch-Positionsstellglied gelagert ist und ein Fisch-Positionierelement des Fisch-Positionierungsmittels bildet. Vorteilhaft ist das Fisch-Positionierelement schwenkbar an das Fisch-Positionsstellglied angelenkt, und der Anschlag-Aktuator bildet einen Schwenkantrieb. Vorteilhaft ist der Anschlag-Aktuator durch einen steuerbaren Anschlag-Druckkolbenzylinder gebildet.

Eine besonders bevorzugte und gestaltete Ausführung besteht darin, dass der Anschlag-Aktuator als mit der Vorrichtungs-Steuereinrichtung verbundenes steuerbares Antriebselement ausgebildet ist, wobei die Vorrichtungs-Steuereinrichtung derart eingerichtet und gestaltet ist, dass das Trigger-Anschlagelement beim Erreichen der temporären Fisch-Stoppposition aus einer Basisposition in Richtung von dem Fisch weg in eine Trigger-Freigabeposition bewegt, insbesondere geschwenkt wird und nach Freigabe des Fisches in die Basisposition zurückbewegt wird. Einerseits wird das Trigger-Anschlagelement in seiner Basisposition besonders optimal durch die Anlage des Fischkopfes während der Auslösebewegung betrieben, und andererseits wird der Fischkopf unmittelbar nach dem Betäuben zuverlässig von dem Trigger-Anschlagelement freigegeben.

Eine besondere Ausgestaltung besteht darin, dass an der Triggereinrichtung ein Doppel-Druckkolbenzylinder angeordnet ist, wobei ein erster Zylinder, nämlich ein Verstell-Druckkolbenzylinder einen Stellglied-Aktuator zum Antrieb und Feststellen des Fisch-Positionsstellgliedes bildet und ein zweiter Druckkolbenzylinder, nämlich ein Anschlag-Druckkolbenzylinder einen Anschlag-Aktuator zum Antrieb, vorzugsweise Schwenkantrieb, eines bewegbar, vorzugsweise schwenkbar, an dem Fisch-Positionsstellglied gelagerten Trigger-Anschlagelements bildet, das ein Fisch-Positionierelement des Fisch-Positionierungsmittels bildet. Der erste Druckkolbenzylinder und der zweite Druckkolbenzylinder sind vorteilhaft mit ein und demselben Zylindergehäuse ausgebildet. Eine besondere Ausführungsform besteht darin, dass eine erste Kolbenstange, die zu dem Verstell-Druckkolbenzylinder gehört, an einen Trigger-Körper der Triggereinrichtung angelenkt ist, und dass eine zweite Kolbenstange, die zu dem Anschlag-Druckkolbenzylinder gehört, an das Positionierelement des Fisch-Positionierungsmittels angelenkt ist, wobei ein Zylindergehäuse des Doppel-Druckkolbenzylinders entlang der ersten Kolbenstange verlagerbar und festsetzbar ist und wobei sich das Fisch-Positionsstellglied zum Verstellen im Eingriff mit diesem Zylindergehäuse befindet.

Eine Gestaltung besteht darin, dass die Fischgrößen-Erfassungseinrichtung ein Messelement aufweist, das einen Fischgrößenwert örtlich und zeitlich vor dem Einfördern des Fisches in den Fisch-Aufnahmeraum erfasst.

Gemäß einer Gestaltung ist vorgesehen, dass die Vorrichtungs-Steuereinrichtung zum Steuern des Fisch-Positionsstellgliedes mit einer Logik-Steuerung eingerichtet ist, die mit der Fischgrößen-Erfassungseinrichtung verbunden ist. Die Logik-Steuerung wird vorteilhaft durch eine programmierbare Logik-Steuereinrichtung (PLC) gebildet.

Insbesondere kann das mechanische Betäubungsmittel in an sich bekannter Weise ausgebildet sein. So umfasst das Betäubungsmittel zum Beispiel einen das Betäubungswerkzeug bildenden Schlagkolben, der mittels einer Betätigungseinrichtung, insbesondere einer gesteuerten Pneumatik-Einrichtung betrieben wird. Diese wird in Verbindung mit einer Pneumatik-Schaltung eingerichtet, die infolge einer Auslösebewegung der Triggereinrichtung initiiert wird. Insbesondere ist die Pneumatik-Schaltung ein Bestandteil der Vorrichtungs-Steuereinrichtung. Wie üblich, kann das Betäubungsmittel als Bestandteil eines Schlachtmittels vorgesehen sein, das als solches zusätzlich zu dem Betäubungsmittel ein Ausblutemittel aufweist, das zum Beispiel in Form eines Messers zwischen dem Kiemendeckel und dem Kopf oder Körper des Fisches zum Trennen der Hauptarterie einführbar ist. Ein Ausblutewerkzeug wird gleichermaßen wie ein Betäubungswerkzeug gesteuert und betrieben. Das heißt, dass auch das Ausblutewerkzeug stationär angeordnet ist und infolge der Fischgrößen-Steuerung bei Fischen unterschiedlicher Kopf-/Körpergröße einheitlich an der gleichen, zur Bearbeitung optimalen Fischstelle eingreift. Die Steuerung wird so eingerichtet, dass ein Betäubungswerkzeug zeitlich vor einem Ausblutewerkzeug ausgelöst bzw. aktiviert wird.

Gemäß einer Gestaltung weist das Fisch-Positionierungsmittel in an sich bekannter Weise ein von einem Trigger-Anschlagelement getrenntes gesteuertes Freigabeelement auf, mit dem der Fisch nach dem Schlachten, das heißt nach dem Deaktivieren des Betäubungswerkzeugs bzw. des Ausblutewerkzeugs aus dem Fisch-Aufnahmeraum gesteuert freigegeben wird. Auch dieses Freigabeelement, zum Beispiel als Positionierelement in Form eines abschwenkbaren Bodens, ist stationär angeordnet, und es wird mittels der genannten Steuerung betrieben. Zum Begrenzen des Fisch-Aufnahmeraums wird das Freigabe-Positionierelement zweckmäßig stets in die gleiche Stopp-/Sperrposition gebracht.

Nach der Erfindung besteht ein Verfahren zum Auslösen eines zum Betäuben eines Fisches auf den kopfseitigen Fischbereich einwirkenden Betäubungsmittels in den mit Anspruch 20 angegebenen Maßnahmen. Die erfindungsgemäße Lehre bezieht an sich gemäß US 6 001 011 A bekannte Verfahrensmaßnahmen ein, nämlich, dass der Fisch mit seinem Kopfbereich unter dem Betäubungsmittel in einer temporären Stoppposition durch Anlage an ein am Fischkopf angreifendes Positionierelement positioniert wird, wobei das ein Trigger-Anschlagelement bildende Positionierelement zum Auslösen des Betäubungsmittels von einer Anfangsposition in eine Endposition bewegt wird, in der ein Initiator zum Auslöse des Betäubungsmittels aktiviert wird, wobei ein die Größe jedes Fisches repräsentierender Fischgrößenwert als Fischgrößen-Steuerwert automatisch erfasst wird und das Positionierelement nach Maßgabe der erfassten Fischgröße mittels des Fischgrößen-Steuerwerts selbsttätig in eine zugehörige genannte Anfangsposition bewegt und gesetzt wird. Erfindungsgemäß werden unterschiedliche Basispositionen in Bezug auf einen Trigger-Körper eingestellt. Diese Verstell-Verlagerung des Fisch-Positionierelements erfolgt vorzugsweise kontinuierlich (stufenlos). Die Anfangsposition und die Endposition bestimmen einen kurzen konstanten Auslöseweg, der zum Beispiel im Bereich von einem Millimeter oder wenigen Millimetern liegt. Vorteilhaft wird die Auslösebewegung des Positionierelements von der Anfangsposition in die Endposition sowie eine Verstellbewegung des Positionierelements zum gesteuerten Bewegen desselben in die Anfangsposition längs einer gemeinsamen geraden Bewegungslinie durchgeführt.

Eine besondere Verfahrensmaßnahme besteht darin, dass das Positionierelement jedenfalls beim Erreichen der Endposition aus einer Basisposition von dem Fischkopf zur Freigabe des Fisches wegbewegt und nach Freigabe des bearbeiteten Fisches in die Basisposition zurückbewegt wird.

Die Erfindung sieht gemäß Anspruch 15 auch ein selbständig handhabbares Modul-Montagebauteil zur Montage in der Triggereinrichtung vor. Eine solche Triggerbaueinheit, eingerichtet zum Einbau in eine erfindungsgemäße Fisch-Betäubungsvorrichtung, umfasst einen Trigger-Körper, der mit einem Lagerelement zum Verlagern der Triggerbaueinheit längs eines Trigger-Auslöseweges eingerichtet ist, ein an dem Trigger-Körper verlagerbar gelagertes Fisch-Positionsstellglied, an dem ein Positionierelement angeordnet ist, das ein Trigger-Anschlagelement zur Stoßverbindung mit einem Fischkopf bildet, und einen steuerbaren Stellglied-Aktuator zum gesteuerten Bewegen und Festsetzen des Fisch-Positionierelements in unterschiedliche Basispositionen, wobei der Stellglied-Aktuator an dem Trigger-Körper gelagert ist und ein steuerbares Antriebselement aufweist, das sich zum gesteuerten Bewegen und Festsetzen des Fisch-Positionsstellgliedes im Eingriff mit diesem befindet.

Die erfindungsgemäße Triggerbaueinheit lässt sich besonders vorteilhaft als Austausch- oder Ersatzteil in eine an sich bekannte Triggereinrichtung einbauen, die mit einem entsprechenden Trigger-Körper ausgestattet ist, der zum Auslösen verlagerbar in einer Fisch-Betäubungseinrichtung gelagert wird. Die Fisch-Betäubungsvorrichtung ist dann auch mit der zugehörigen Fischsteuerung auszustatten. Die Trigger-Baueinheit lässt sich besonders kompakt und gewichtsmäßig leicht ausführen. Die Triggereinrichtung der Fisch-Betäubungseinrichtung ist zum Auslösen des Betäubungsmittels in jedem Fall mit einem definierten Auslöseweg ausgebildet. Die Trigger-Baueinheit ist zum Verlagern entlang dieses Auslösewegs eingerichtet. Vorteilhaft wird das Positionsstellglied an dem Trigger-Körper so angeordnet und gelagert, und das Trigger-Lagerelement wird so ausgebildet, dass die Auslösebewegung des Trigger-Körpers entlang des Auslöseweges sowie die steuerbare Verstellbewegung des Positionierelements entlang einer gemeinsamen geraden Bewegungslinie erfolgen. Durch die Modulausführung der Trigger-Baueinheit wird auch die Reinigung der Fisch-Betäubungsvorrichtung vereinfacht.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als strukturell selbstständiges Detailbeispiel für andere nicht oder nicht vollständig beschriebene, unter die Erfindung fallende Ausführungen und Gestaltungen zu verstehen.

Es zeigen
- Fig. 1: eine erfindungsgemäße Fisch-Betäubungsvorrichtung,
- Fig. 2A und 2B: in Längsseitenansicht eine erfindungsgemäße Triggerbaueinheit einer Triggereinrichtung einer erfindungsgemäßen Fisch-Betäubungsvorrichtung in gesteuerter Einstellung für einen relativ großen Fisch und
- Fig. 3A und 3B: in Längsseitenansicht eine erfindungsgemäße Triggerbaueinheit einer Triggereinrichtung einer erfindungsgemäßen Fisch-Betäubungsvorrichtung in gesteuerter Einstellung für einen relativ kleinen Fisch.

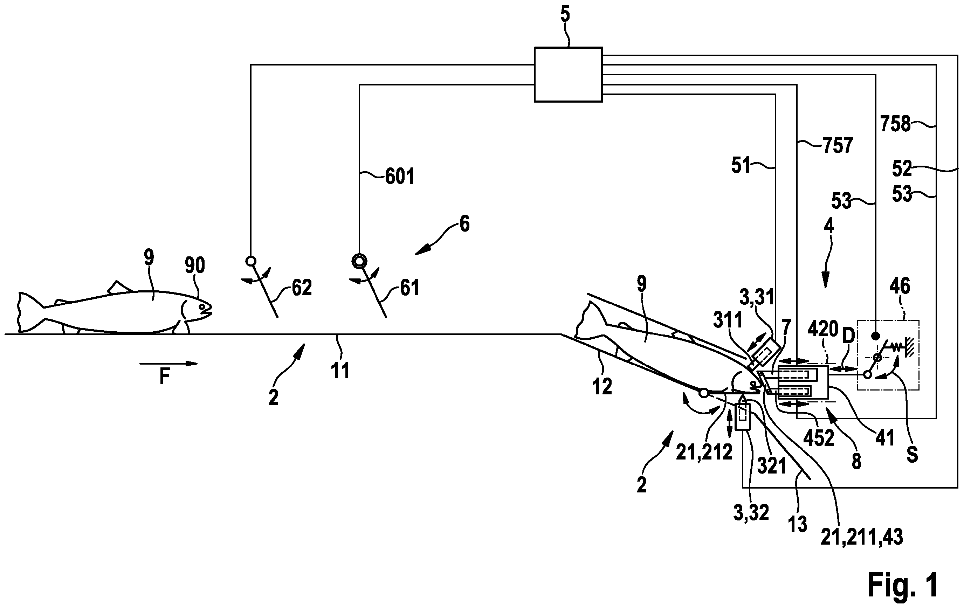

Die Fisch-Betäubungsvorrichtung gemäß Fig. 1 ist nur mit ihren zur Beschreibung der Erfindung wesentlichen Teilen und Bereichen dargestellt. Zu der Fisch-Betäubungsvorrichtung 1 gehörende Einrichtungen und Mittel sind an einem nicht dargestellten Vorrichtungsrahmen wie einem Gestell oder dergleichen Konsolen angeordnet und gelagert. Die Fisch-Betäubungsvorrichtung 1 umfasst eine Fisch-Zuführeinrichtung 11, einen von der Fisch-Zuführeinrichtung 11 mit Fisch 9 in Kopfvoraus-Lage beschickbaren Fisch-Aufnahmeraum 12, eine Fisch-Positioniereinrichtung 2 mit einem am Fischkopf 90 angreifenden Fisch-Positionierungsmittel 21, ein Betäubungsmittel 31, das im kopfseitigen Bereich des Fisches 9 mechanisch auf den Schädel einwirkt, eine Triggereinrichtung 4 mit einer Trigger-Baueinheit 8, durch die der Betrieb des Betäubungsmittels 31 zum Einwirken auf den Fischschädel auslösbar ist, und eine Vorrichtungs-Steuereinrichtung 5, mit der die genannten Einrichtungen und Mittel über Signal-/Steuerleitungen funktions- und wirkverbunden sind.

Weiterhin gehören eine die Fischgröße erfassende Fischgrößen-Erfassungseinrichtung 6, ein mittels der Fischgrößen-Erfassungseinrichtung 6 steuerbares Fisch-Positionsstellglied 7 und ein zugehöriger Steuerbereich oder -teil der Vorrichtungs-Steuereinrichtung 5 zu der Fisch-Positioniereinrichtung 2.

Die Fisch-Betäubungsvorrichtung 1 ist so eingerichtet, dass Fische 9 in Förderrichtung F mit Bauchlage und kopfvoraus aufeinanderfolgend entlang eines Wasserstroms über die Fisch-Zuführeinrichtung 11 in den Fisch-Aufnahmeraum 12 gelangen. Eine Fisch-Zuführeinrichtung kann auch als Eingangsraum des Fisch-Aufnahmeraums ausgebildet sein.

In Fig. 1 befindet sich ein Fisch 9 zum Schlachten in dem Fisch-Aufnahmeraum 12. Das Fisch-Positionierungsmittel 21 ist durch ein Positionierelement 211 sowie ein Freigabeelement 212 gebildet. Das Positionierelement 211 und das Freigabeelement 212 bilden einen Positionierraum aus, in dem der Fisch 9 an seinem Kopfende beim Herbeiführen einer Stopp-/Bearbeitungsposition positioniert wird. Das vordere Oberteil des Kopfes 90 gelangt zur Anlage an das Positionierelement 211, und das Freigabeelement 212 hält den Fisch an seiner Kopf- und Körperunterseite. Der Fisch-Aufnahmeraum weist einen Boden mit einer Rutschfläche auf, die in Förderrichtung nach unten geneigt ist. Dadurch gelangt der Fisch 9 mit durch sein Eigengewicht bewirkter Anlagekraft gegen das Positionierelement 211.

Das Fisch-Betäubungsmittel 31 ist der Oberseite des Fischkopfes 90 zugeordnet. Das Fisch-Betäubungsmittel 31 ist Bestandteil eines Schlachtmittels 3, zu dem auch ein Ausblutungsmittel 32 mit einem Ausblutungswerkzeug 321, z. B. einem Messer gehört. Das Ausblutungsmittel 32 ist der Fischunterseite im Bereich zwischen Kopf und Kiemen zum Durchtrennen der Hauptarterie zugeordnet. Das Betäubungsmittel 31 sowie das Ausblutungsmittel 32 sind stationär am Vorrichtungsgestell angeordnet.

Besondere Bedeutung kommt dem Positionierelement 211 des Fisch-Positionierungsmittels 21 zu. Das Positionierelement 211 ist ein Trigger-Anschlagelement 43 der Triggereinrichtung 4 bzw. der Trigger-Baueinheit 8, das unter der Stoßanlage des Fisches 9 entsprechend einem Trigger-Auslöseweg bewegbar ist. Erfindungsgemäß ist das Positionierelement 211 nach Maßgabe der Fischgröße in unterschiedliche Basispositionen bewegbar. Das Positionierelement 211 ist derart mit der Fischgrößen-Erfassungseinrichtung 6 über die Vorrichtungs-Steuereinrichtung 5 verbunden, dass es nach Maßgabe gemessener Fischgröße den Fisch-Aufnahmeraum 12 an der Kopfseite in Fischrichtung vergrößert oder verkleinert. Man erreicht damit, dass das Betäubungsmittel 31 mit seinem Betäubungswerkzeug 311 jeweils an einer optimal zur Betäubung geeigneten einheitlichen Stelle bzw. Position eines jeden Fisches 9 zu liegen kommt, nämlich insbesondere stets etwa in der Mitte des Kopfschädels, und zwar für Fische 9 unterschiedlicher Körper- und/oder Kopfgröße. Gleichermaßen kommt das Ausblutungswerkzeug 321 an jeweils korrekter Einstichstelle in der Nähe des Kiemendeckels zu liegen.

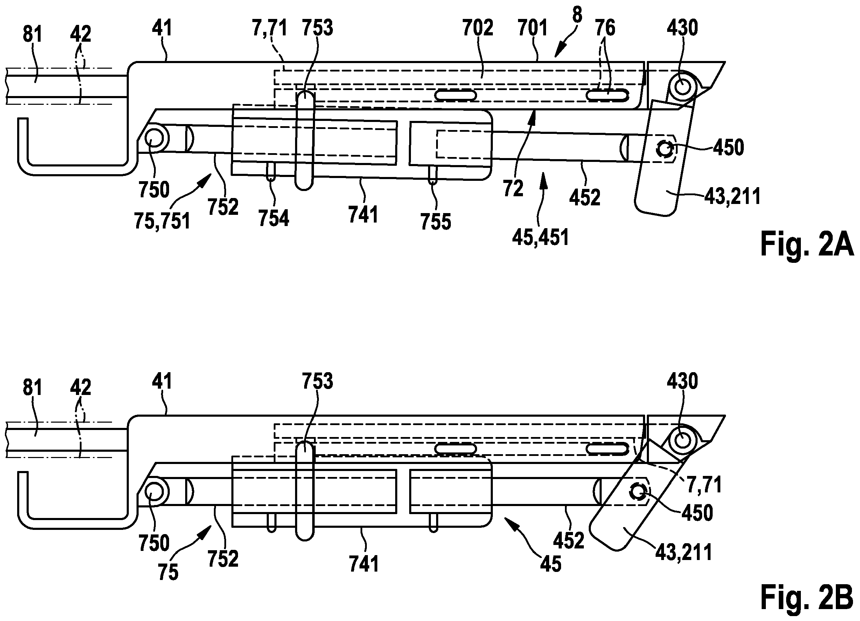

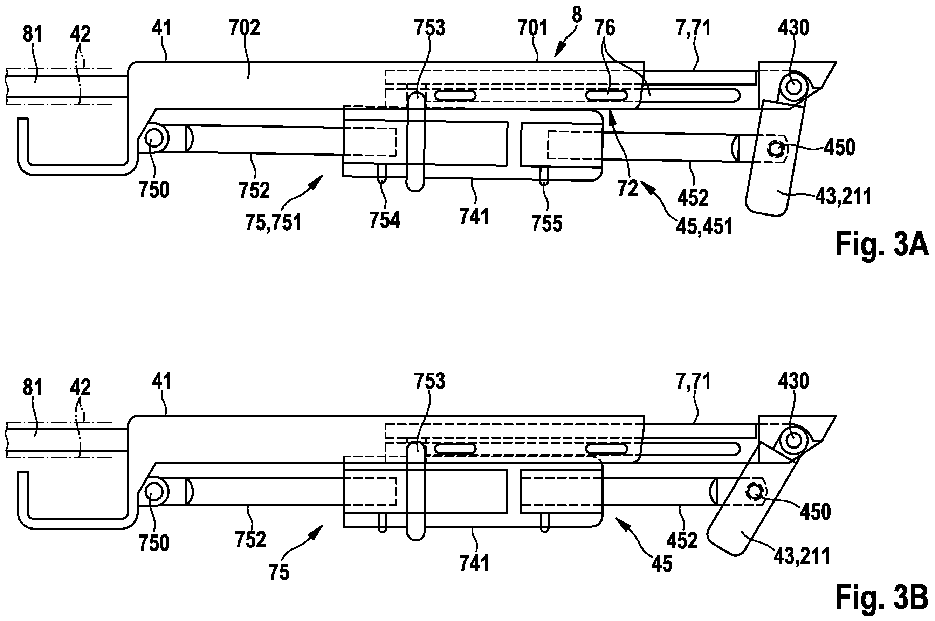

Wie insbesondere aus Fig. 2 und 3 ersichtlich, weist die Triggerbaueinheit 8 einen sich mit einer Längsachse erstreckenden Trigger-Körper 41 in Form eines Profilkörpers auf, der einen Aufnahmeraum 72 ausbildet, mit dem das Fisch-Positionsstellglied 7 in Form eines Schlittenelements 71 in der Länge der Triggerbaueinheit 8 verschiebbar gelagert ist. Der Aufnahmeraum 72 ist im nicht dargestellten Querschnitt U-förmig mit einer Stegwand 701 und Schenkelwänden 702 ausgebildet. Damit ist der Aufnahmeraum 72 an einer Unterseite offen, und das Fisch-Positionsstellglied 7 wird mittels einer Schlittenführung 76 im Gleitsitz längs-schiebebewegbar gehalten. Die Einbauposition kann auch so eingerichtet werden, dass das Fisch-Positionsstellglied an der Unterseite der Trigger-Baueinheit zu liegen kommt.

Das Fisch-Positionsstellglied 7 ragt an einer Vorderseite des Trigger-Körpers 41 mit einem freien Ende aus dem Aufnahmeraum 72 heraus. An diesem freien Ende ist das Trigger-Anschlagelement 43 um eine Achse 430 senkrecht zu der Längsachse schwenkbar angelenkt, und zwar mit Schwenkkomponente in Richtung der Längsachse. Das andere rückwärtige Längsende des Fisch-Positionsstellgliedes 7 befindet sich im Eingriff mit einem Antriebselement eines Stellglied-Aktuators 75, der als steuerbare Antriebseinrichtung ausgebildet ist.

Der Stellglied-Aktuator 75 ist integraler Bestandteil eines Doppel-Druckkolbenzylinders 74, der unterhalb des Aufnahmeraums 72 angeordnet ist. Der Stellglied-Aktuator 75 ist durch einen Verstell-Druckkolbenzylinder 751 gebildet, der eine zur Rückseite des Trigger-Körpers 41 ragende Kolbenstange 752 aufweist, die an eine Rückwand des Trigger-Körpers 41 um eine mit der Achse 430 parallele Achse 750 schwenkbewegbar angelenkt ist. Der Doppel-Druckkolbenzylinder 74 weist ein in Längsrichtung des Trigger-Körpers 41 verlagerbares Zylindergehäuse 741 auf. Dieses bildet das Antriebselement des Aktuators 75. Ein an dem Antriebselement starr angeordneter Mitnehmer 753 greift gleitbewegbar in eine Ausnehmung an dem rückwärtigen Ende des Fisch-Positionsstellgliedes 7 ein. Dadurch ist der Eingriff des Fisch-Positionsstellgliedes 7 mit dem Antriebselement hergestellt. Eine mit dem Verstell-Druckkolbenzylinder 751 erzeugte Antriebs-/Verstellbewegung des Zylindergehäuses 41 wird mittels der Vorrichtungssteuereinrichtung 5 nach Maßgabe des mit der Fischgrößen-Erfassungseinrichtung 6 festgestellten Fischgrößenwerts gesteuert. Über wenigstens eine Steueröffnung, die in Fig. 2 und 3 mit 754 gekennzeichnet ist, erfolgt durch geeignete Druckbeaufschlagung die gesteuerte Antriebsbewegung des Verstell-Druckkolbenzylinders 751. Dieser ist zum Beispiel, wie dies an sich bekannt ist, mit einer nicht dargestellten Druck erzeugenden Einrichtung, zum Beispiel einer Pneumatik-Steuerschaltung verbunden, die ihrerseits in Steuerverbindung mit der Vorrichtungs-Steuereinrichtung 5 bzw. der Fischgrößen-Erfassungseinrichtung 6 steht. In Fig. 1 ist diese Steuerverbindung mit 757 bezeichnet.

Auch ein Anschlag-Aktuator 45 ist integraler Bestandteil des Doppel-Druckkolbenzylinders 74. Dieser weist an seiner dem Trigger-Anschlagelement 43 zugewandten Vorderseite einen Anschlag-Druckkolbenzylinder 451 auf. Die zugehörige Kolbenstange 452 ist um eine zu den Schwenkachsen 430, 750 parallele Schwenkachse 450 schwenkbar an das Trigger-Anschlagelement 43 angelenkt. Die Kolbenstange 752 und die Kolbenstange 452 arbeiten in einer geraden Bewegungslinie.

Der Anschlag-Aktuator 45 lässt sich besonders gestalten und betreiben. Eine Ausführungsform besteht darin, dass der Anschlag-Aktuator 45 mit der Vorrichtungs-Steuereinrichtung 5 über eine Steuerleitung 758 verbunden ist. Die Vorrichtungs-Steuereinrichtung 5 wird derart eingerichtet und konfiguriert, dass das Trigger-Anschlagelement 43 beim Erreichen der temporären Fisch-Stoppposition aus seiner Basisposition in Richtung von dem Fischkopf weg in eine Trigger-Freigabeposition geschwenkt wird und nach Freigabe des Fisches 9 in die Basisposition zurückgeschwenkt wird. Die mittels des Stellglied-Aktuators 75 gesteuerte und definierte Basisposition des Trigger-Anschlagelements 43, nämlich die Position in Bezug auf den Trigger-Körper 41, die zum Auftreffen des Fischkopfes auf das Trigger-Anschlagelement 43 eingestellt wird, bleibt vorteilhaft bis zum Auslösen des Betäubungsmittels, also bis zum Erreichen der Stoppposition des Fisches 9 erhalten. Zum Ausschwenken sowie zum Freischwenken des Trigger-Anschlagelements 43 wird der Anschlag-Aktuator 45 über eine Steueröffnung 755 gesteuert.

Der Anschlag-Aktuator 45 kann statt der genannten Freigabeeinrichtung oder zusätzlich auch eine Dämpfungseinrichtung bilden. Zum Beispiel wird ein maximaler Hub der Kolbenstange 452 eingerichtet. Soweit allein eine Dämpfungseinrichtung vorgesehen wird, kann der Anschlag-Druckkolbenzylinder 451 durch ein passiv arbeitendes Feder- oder Druckelement gebildet sein.

Die erfindungsgemäße Triggerbaueinheit 8 ist nicht auf die Ausführung mit dem Doppel-Druckkolbenzylinder 74 beschränkt. Eine Freigabebewegung und/oder Dämpfung des Trigger-Anschlagelements 43 kann gänzlich entfallen, wobei das Trigger-Anschlagelement 43 dann körperfest an dem freien Ende des Fisch-Positionsstellgliedes 7 angeordnet werden kann.

Der Stellglied-Aktuator 75 und der Anschlag-Aktuator 45 können auch durch separate Druckkolbenzylinder gebildet sein. Der Stellglied-Aktuator 75 bzw. der Anschlag-Aktuator 45 kann auch durch jeden anderen aktiv steuerbaren Antrieb zur Steuerbewegung des Fisch-Positionsstellgliedes 7 bzw. des Trigger-Anschlagelements 43 ersetzt werden.

Anhand der Fig. 2 und 3 erkennt man Resultate der Positionssteuerung des Trigger-Anschlagelements 43, dass das Positionierelement 211 des Fisch-Aufnahmeraums 12 bildet.

Fig. 2A und 2B zeigen gesteuerte Einstellungen des Trigger-Anschlagelements 43 für einen relativ großen Fisch bzw. relativ großen Fischkopf. In Fig. 2A befindet sich das Trigger-Anschlagelement 43 in einer Basis-/Ausgangsposition in Bezug auf den Trigger-Körper 41. Eine Schwenk-Winkelposition und damit Ausrichtung des Trigger-Anschlagelements 43 kann durch Steuerung des Anschlag-Aktuators 45 beibehalten werden, während der Trigger-Körper 41 in die Trigger-Auslöseposition bewegt wird. In der entsprechenden Stoppposition des Fisches 9 werden die Schlachtwerkzeuge 311, 321 in Betrieb gesetzt. Unmittelbar nach dem Schlachtvorgang wird das Trigger-Anschlagelement 43 in Richtung von dem Fischkopf 90 weg in eine aufgesteuerte Freigabeposition geschwenkt. Die zugehörige Schwenk-Winkelposition ist in Fig. 2B dargestellt. Das Fisch-Positionsstellglied 7 ist im Ausführungsbeispiel zum Einstellen der Basisposition für den großen Fisch 9 vollständig in den Aufnahmeraum 72 eingefahren.

Der Trigger-Körper 41 weist ein Lagerelement 81 auf, das in Fig. 2 und 3 als Lagerstab oder Lagerplatte am rückwärtigen Ende des Trigger-Körpers 41 angeordnet ist. Das Lagerelement 81 ist derart eingerichtet und ausgebildet, dass die Triggerbaueinheit 8 in einem Lager 42 der Fisch-Betäubungsvorrichtung 1 zum Verschieben längs des Trigger-Auslösewegs gelagert wird. Das Lager 42 ist stationär an dem nicht dargestellten Vorrichtungsrahmen angeordnet.

Der Auslöseweg ist konstant eingestellt, wobei die zugehörige Auslösebewegung endet, wenn der Trigger-Körper 41 einen Sensor oder Initiator 46 erreicht, der mit der Vorrichtungs-Steuereinrichtung 5 verbunden ist und mittels dieser das Auslösen des Schlachtmittels, nämlich im Ausführungsbeispiel des Betäubungsmittels 31 und des Ausblutemittels 32 bewirkt. Die zugehörigen Steuerverbindungen sind in Fig. 1 mit 51, 52 und 53 bezeichnet. Man erkennt, dass die Auslösebewegung des Positionierelements 211 von einer Anfangsposition in eine Endposition sowie die Verstellbewegung des Positionierelements 211 zum gesteuerten Bewegen des Positionierelements 211 in seine Basisposition mittels des Fisch-Positionsstellgliedes 7 längs einer gemeinsamen geraden Bewegungslinie durchgeführt werden. Der Anschlag-Aktuator 45 kann so betrieben und/oder gestaltet werden, dass die Trigger-Auslösebewegung in Verbindung mit einer Dämpfungsbewegung erfolgt. Die Trigger-Auslösebewegung kann der Dämpfungsbewegung zeitlich folgen. Diese Bewegungen können sich auch überlagern.

Im Ausführungsbeispiel der Fig. 1 wird das Ende der Auslösebewegung bzw. des Auslösewegs durch einen Endschalter bestimmt und bewirkt. Dieser weist einen doppelarmigen Auslöse-/Schalthebel auf. Eine Linearbewegung D des Trigger-Körpers 41 wird in eine Schwenkbewegung P des Auslösehebels umgesetzt, der gegen rückstellende Federkraft in eine definierte Endlage geschwenkt wird, die mittels des Sensors und Initiators 46 festgestellt wird. Die Erfindung ist nicht, auch nicht im Ausführungsbeispiel, auf eine solche Einrichtung zum Bestimmen und Erfassen des Auslöseweges zum Initiieren der Steuerung und des Betriebs der genannten Einrichtungen und Mittel beschränkt. Jede andere Einrichtung, die die Auslösebewegung einrichtet und erfasst und die Triggereinrichtung bzw. den Trigger-Körper 41 am Ende des Auslöseweges wieder in die Anfangsposition zurücksetzt, kann vorgesehen werden. In Fig. 1 ist die Lagerung der Triggerbaueinheit 8 schematisch bei 420 angedeutet. Ein in Fig. 2 und 3 an der rückwärtigen Seite der Triggerbaueinheit 8 angeordneter Griff zum manuellen Auslösen der Triggereinrichtung 4 ist in Fig. 1 nicht dargestellt.

Die Fig. 3A stellt den Fall dar, dass ein relativ kleiner Fisch bzw. ein relativ kleiner Fischkopf 90 mittels der Fischgrößen-Erfassungseinrichtung 6 festgestellt worden ist. Das Trigger-Anschlagelement 43, das das Positionierelement 211 bildet, befindet sich in einer Schwenk-Winkelposition an der Schwenkachse 450, die gleich der Schwenkposition in Fig. 2A ist und die vorteilhaft bis zur Trigger-Endposition bzw. zur Stoppposition des Fisches 9 beibehalten wird. Auch die Freigabeposition (Schwenk-Winkelstellung) gemäß Fig. 3B ist gleich der Stellung in Fig. 2B. Der wesentliche Unterschied zwischen den Fig. 2 und 3 besteht darin, dass in den Fig. 3 das Fisch-Positionsstellglied 7 mittels des gesteuerten Stellglied-Aktuators 75 relativ weit ausgefahren ist, so dass der Fisch-Aufnahmeraum 12 mit dieser Basisposition entsprechend verkürzt wird, so dass auch der erfasste kleine Fischkopf positionsgenau an dem Schlachtmittel 3 zu liegen kommt. Im Übrigen trifft die Ablauf- und Funktionsbeschreibung zu Fig. 2 gleichermaßen auf Fig. 3 zu.

Im Ausführungsbeispiel gemäß Fig. 1 ist die Fischgrößen-Erfassungseinrichtung 6 mit einem Winkelkodierer 61 ausgestattet, der die Fischgröße oder Kopfgröße erfasst und in einen geeigneten Steuerwert umsetzt, mit dem die Vorrichtungs-Steuereinrichtung 5 über eine Steuerverbindung 601 beaufschlagt wird. Die Fischgrößen-Erfassungseinrichtung 6 kann durch jede andere geeignete Fischgrößen-Erfassungseinrichtung ersetzt werden. Der Fisch kann auch gewogen werden. Die Fischgrößen-Erfassungseinrichtung 6 ist derart stromaufwärts des Fisch-Aufnahmeraums 12 angeordnet und/oder mit einer Wegverfolgung verbunden, dass der erfasste Fisch-Größenwert jeweils dem zugehörigen, in den Fisch-Aufnahmeraum 12 gelangenden Fisch 9 zugeordnet wird. Im Ausführungsbeispiel weist die Fischgrößen-Erfassungseinrichtung 6 stromaufwärts des Winkelkodierers 61 am Eingang der Fisch-Betäubungseinrichtung 1 auch eine Überwachungseinrichtung 62 auf, die mit einem schwenkbaren Gatter ausgestattet und über eine Steuerleitung 602 mit der Vorrichtungs-Steuereinrichtung 5 verbunden ist. Mittels dieser Einrichtung wird sichergestellt, dass die Fische 9 vereinzelt zugeführt werden, so dass sie mit Abstand aufeinander folgen. Anstelle oder zusätzlich zu dem Winkelkodierer 61 kann das Gatter mit einem Mittel wie einem Winkelkodierer zum Erfassen der Fischgröße eingerichtet sein.

Die beschriebene Endposition des Trigger-Anschlagelements 43 bzw. des Positionierelements 211 am Ende der Auslösebewegung bestimmt die eigentliche Stoppposition des Fisches 9 in dem Fisch-Aufnahmeraum 12. Wie bereits beschrieben, wird einerseits das Betäubungsmittel 31 und andererseits anschließend, üblicherweise nach wenigen Millisekunden, das Ausblutemittel 32 ausgelöst. Der auf diese Weise geschlachtete Fisch 9 gelangt dadurch in einen Fisch-Abführraum oder -Abführweg 13, dass das Freigabeelement 212 zum Öffnen des Fisch-Aufnahmeraums 12 über eine nicht dargestellte Steuerleitung mittels der Vorrichtungs-Steuereinrichtung 5 ausgelöst wird. Im Übrigen stellt die beschriebene Freistellung des Trigger-Anschlagelements 43 mittels des gesteuerten Anschlag-Aktuators 45 sicher, dass der geschlachtete Fisch 9 zuverlässig frei kommt, ohne dass er an dem Trigger-Anschlagelement 43 hängen bleibt.

Die Vorrichtungs-Steuereinrichtung 5 ist mit an sich üblichen Komponenten einer Computereinrichtung und elektronischen Steuerung, gegebenenfalls in Verbindung mit Steuerschaltungen wie Pneumatik-Steuerschaltungen, derart eingerichtet, dass sämtliche Einrichtungen und Mittel unmittelbar nach ihrer Betätigung in den Ausgangszustand zurückgesetzt werden, so dass der Fisch-Aufnahmeraum 12 zur Aufnahme und Bearbeitung des nächsten Fisches 9 bereit ist. Vorteilhaft wird die Vorrichtungs-Steuereinrichtung 5 mit einer programmierbaren Logik (PLC) ausgestattet. Insbesondere wird die Fisch-Größenerfassung und die Steuerung für unterschiedliche Fischarten und/ oder in Anpassung auf Charakteristika von Körpergeometrie und/oder Gewicht programmiert.

## Patentansprüche

1. Fisch-Betäubungsvorrichtung (1), umfassend
- eine Fisch-Zuführeinrichtung (11), die zur Kopfvoraus-Förderung von Fisch (9) eingerichtet ist,
- einen von der Fisch-Zuführeinrichtung (11) mit Fisch in Kopfvoraus-Lage beschickbaren Fisch-Aufnahmeraum (12),
- eine Fisch-Positioniereinrichtung (2) mit einem am Fischkopf (90) angreifenden Fisch-Positionierungsmittel (21), das in dem Fisch-Aufnahmeraum (12) zum Betäuben des Fisches (9) eine temporäre Stoppposition des Fisches bestimmt, die nach dem Betäuben zur Abgabe des Fisches (9) freigebbar ist,
- ein Betäubungsmittel (31), das zum Betäuben auf den kopfseitigen Bereich des Fisches (9) in seiner temporären Stoppposition in dem Fisch-Aufnahmeraum (12) einwirkt,
- eine Triggereinrichtung (4), mittels der die temporäre Stoppposition feststellbar und der Betrieb des Betäubungsmittels (31) zum Einwirken auf den kopfseitigen Fischbereich auslösbar ist, und
- eine Vorrichtungs-Steuereinrichtung (5), die zur Betriebssteuerung mit der Fisch-Positioniereinrichtung (2), dem Betäubungsmittel (31) und der Triggereinrichtung (4) wirkverbunden ist,
wobei die Fisch-Positioniereinrichtung (2) mit einer die Fischgröße erfassenden Fischgrößen-Erfassungseinrichtung (6) sowie mit einem mittels der Fischgrößen-Erfassungseinrichtung (6) steuerbaren Fisch-Positionsstellglied (7) eingerichtet ist, das zum örtlichen Verstellen des Fisch-Positionierungsmittels (21) mit diesem verbunden ist, wodurch zum Herbeiführen der temporären Fisch-Stoppposition jeder Fischkopf (90) nach Maßgabe der Fischgröße in eine in Bezug auf das Betäubungsmittel (31) einheitliche Position selbsttätig bewegbar ist, **dadurch gekennzeichnet, dass** das Fisch-Positionsstellglied (7) einen Bestandteil der Triggereinrichtung (4) bildet, wobei die Triggereinrichtung (4) in Abhängigkeit von an der Triggereinrichtung (4) verlagerbaren und festsetzbaren Ortspositionen des Positionsstellgliedes (7) auslösbar ist, die mittels der Fischgrößensteuerung steuerbar sind.

2. Fisch-Betäubungsvorrichtung nach Anspruch 1, **dadurch gekennzeichnet, dass** ein Trigger-Körper (41) der Triggereinrichtung (4), an dem das Positionsstellglied (7) verlagerbar und festsetzbar gelagert ist, an einem stationären Lager (42) der Fisch-Betäubungsvorrichtung (1) zur Auslösebewegung längs eines definierten Auslöseweges bewegbar gelagert ist.

3. Fisch-Betäubungsvorrichtung nach Anspruch 1 oder 2, **dadurch gekennzeichnet, dass** die Triggereinrichtung (4) ein zur Anlage eines Fisches (9) eingerichtetes Trigger-Anschlagelement (43) aufweist, das ein Positionierelement (211) des Fisch-Positionierungsmittels (21) bildet und aus einer Anfangsposition verlagerbar angeordnet ist, wobei das Trigger-Anschlagelement (43) mit dem Fisch-Positionsstellglied (7) zum Verstellen in unterschiedliche Basispositionen verbunden ist.

4. Fisch-Betäubungsvorrichtung nach einem der Ansprüche 1 bis 3, d**adurch gekennzeichnet,** dass das Fisch-Positionsstellglied (7) durch ein Verstell-Schlittenelement (71) gebildet ist, das schiebebewegbar und in durch die Fischgrößensteuerung bestimmter Schiebeposition festsetzbar an der Triggereinrichtung (4) gelagert ist.

5. Fisch-Betäubungsvorrichtung nach einem der Ansprüche 1 bis 4, **dadurch gekennzeichnet, dass** an der Triggereinrichtung (4) ein einen Antrieb des Fisch-Positionsstellgliedes (7) bildender Stellglied-Aktuator (75) angeordnet ist, der zum Antrieb und Festsetzen des Fisch-Positionsstellgliedes (7) nach Maßgabe der Fischgröße steuerbar ist.

6. Fisch-Betäubungsvorrichtung nach Anspruch 5, **dadurch gekennzeichnet, dass** der Stellglied-Aktuator (75) durch einen steuerbaren Verstell-Druckkolbenzylinder (751) gebildet ist.

7. Fisch-Betäubungsvorrichtung nach einem der Ansprüche 1 bis 6, **dadurch gekennzeichnet, dass** an der Triggereinrichtung (4) ein Anschlag-Aktuator (45) angeordnet ist, der zum Verstellen eines bewegbar an das Fisch-Positionsstellglied (7) angelenkten Trigger-Anschlagelements (43) eingerichtet ist, das ein Fisch-Positionierelement (211) des Fisch-Positionierungsmittels (21) bildet.

8. Fisch-Betäubungsvorrichtung nach Anspruch 7, **dadurch gekennzeichnet, dass** der Anschlag-Aktuator (45) durch einen steuerbaren Anschlag-Druckkolbenzylinder (451) gebildet ist.

9. Fisch-Betäubungsvorrichtung nach einem der Ansprüche 1 bis 8, **dadurch gekennzeichnet, dass** an der Triggereinrichtung (4) ein Doppel-Drucckolbenzylinder (74) angeordnet ist, der einen Verstell-Druckkolbenzylinder (751) aufweist, der einen Stellglied-Aktuator (75) zum Antrieb und Festsetzen des Fisch-Positionsstellgliedes (7) bildet, und der einen Anschlag-Druckkolbenzylinder (451) aufweist, der einen Anschlag-Aktuator (45) zum Antrieb eines bewegbar an dem Fisch-Positionsstellglied (7) gelagerten Trigger-Anschlagelements (43) bildet, das ein Fisch-Positionierelement (211) des Fisch-Positionierungsmittels (21) bildet.

10. Fisch-Betäubungsvorrichtung nach Anspruch 9, **d a durch gekennzeichnet,** dass eine erste Kolbenstange (752), die zu dem Verstell-Drucckolbenzylinder (751) gehört, an einen Trigger-Körper (41) der Triggereinrichtung (4) angelenkt ist und dass eine zweite Kolbenstange (452), die zu dem Anschlag-Druckkolbenzylinder (451) gehört, an das Positionierelement (211) des Fisch-Positionierungsmittels (21) angelenkt ist, wobei ein Zylindergehäuse (741) des Doppel-Druckkolbenzylinders (74) entlang der ersten Kolbenstange (752) verlagerbar und festsetzbar ist und wobei sich das Fisch-Positionsstellglied (7) zum Verstellen im Eingriff mit dem Zylindergehäuse (741) befindet.

11. Fisch-Betäubungsvorrichtung nach einem der Ansprüche 7 bis 10, **dadurch gekennzeichnet, dass** der Anschlag-Aktuator (45) als mit der Vorrichtungs-Steuereinrichtung (5) verbundenes steuerbares Antriebselement ausgebildet ist, wobei die Vorrichtungs-Steuereinrichtung (5) derart eingerichtet und geschaltet ist, dass das Trigger-Anschlagelement (43) beim Erreichen der temporären Fisch-Stoppposition aus einer Basisposition in Richtung von dem Fischkopf (90) weg in eine Trigger-Freigabeposition bewegt wird und nach Freigabe des Fisches (9) in die Basisposition zurückbewegt wird.

12. Fisch-Betäubungsvorrichtung nach einem der Ansprüche 7 bis 11, **dadurch gekennzeichnet, dass** der Anschlag-Aktuator (45) als Dämpfungselement ausgebildet ist, wobei das Trigger-Anschlagelement (43) beim Anschlag eines Fischkopfes (90) aus einer Basisposition in Richtung von dem Fischkopf (90) weg gegen eine Rückstellkraft ausweicht, durch die das Trigger-Anschlagelement (43) bei Freigabe des Fisches (9) in die Basisposition zurückbewegt wird.

13. Fisch-Betäubungsvorrichtung nach einem der Ansprüche 1 bis 12, **dadurch gekennzeichnet, dass** die Fischgrößen-Erfassungseinrichtung (6) ein Messelement aufweist, das einen Fischgrößenwert örtlich und zeitlich vor dem Einfördern des Fisches (9) in den Fisch-Aufnahmeraum (12) erfasst.

14. Fisch-Betäubungsvorrichtung nach einem der Ansprüche 1 bis 13, **dadurch gekennzeichnet, dass** die Vorrichtungs-Steuereinrichtung (5) zum Steuern des Fisch-Positionsstellgliedes (7) mit einer programmierbaren Logik-Steuerung eingerichtet ist.

15. Triggerbaueinheit (8), eingerichtet zum Einbau in eine Fisch-Betäubungsvorrichtung (1) nach einem der Ansprüche 1 bis 14, umfassend einen Trigger-Körper (41), der mit einem Lagerelement (81) zum Verlagern der Triggerbaueinheit (8) längs eines Auslöseweges ausgebildet ist, ein Fisch-Positionsstellglied (7), an dem ein Fisch-Positionierelement (211) eines Fisch-Positionierungsmittels (21) angeordnet ist, das ein Trigger-Anschlagelement (43) für einen Fischkopf (90) bildet, und einen steuerbaren Stellglied-Aktuator (75) zum gesteuerten Bewegen und Festsetzen des Fisch-Positionierelements (211), wobei der Stellglied-Aktuator (75) an dem Trigger-Körper (41) gelagert ist und ein steuerbares Antriebselement aufweist, das sich zum gesteuerten Bewegen und Festsetzen des Fisch-Positionsstellgliedes (7) im Eingriff mit diesem befindet.

16. Triggerbaueinheit nach Anspruch 15, **dadurch gekennzeichnet, dass** der Stellglied-Aktuator (75) durch einen steuerbaren Verstell-Druckkolbenzylinder (751) gebildet ist.

17. Triggerbaueinheit nach Anspruch 15 oder 16, **dadurch gekennzeichnet, dass** die Triggerbaueinheit (8) einen Anschlag-Aktuator (45) aufweist, der zum Antrieb des Fisch-Positionierelements (211) eingerichtet ist, das an dem Fisch-Positionsstellglied (7) bewegbar gelagert ist.

18. Triggerbaueinheit nach Anspruch 16 oder 17, **dadurch gekennzeichnet, dass** die Triggerbaueinheit (8) einen Doppel-Druckkolbenzylinder (74) aufweist, wobei ein Verstell-Druckkolbenzylinder (751) den Stellglied-Aktuator (75) zum Antrieb und Festsetzen des Fisch-Positionsstellgliedes (7) bildet und ein steuerbarer Anschlag-Druckkolbenzylinder (451) zum Antrieb des Positionierelements (211) mit diesem verbunden ist, wobei das Positionierelement (211) bewegbar an dem Fisch-Positionsstellglied (7) gelagert ist.

19. Triggerbaueinheit nach Anspruch 18, **dadurch gekennzeichnet, dass** eine erste Kolbenstange (752), die zu dem Verstell-Druckkolbenzylinder (751) gehört, an den Trigger-Körper (41) angelenkt ist, und dass eine zweite Kolbenstange (452), die zu dem Anschlag-Druckkolbenzylinder (451) gehört, an das Positionierelement (211) des Fisch-Positionierungsmittels (21) angelenkt ist, wobei ein Zylindergehäuse (741) des Doppel-Druckkolbenzylinders (74) entlang der ersten Kolbenstange (752) verlagerbar und festsetzbar ist und wobei sich das Fisch-Positionsstellglied (7) zum Verstellen im Eingriff mit dem Zylindergehäuse (741) befindet.

20. Verfahren zum Auslösen eines zum Betäuben eines Fisches (9) auf den kopfseitigen Fischbereich einwirkenden Betäubungsmittels (31), wobei der Fisch (9) mit seinem Kopfbereich unter dem Betäubungsmittel (31) in einer temporären Stoppposition durch Anlage an ein am Fischkopf (90) angreifendes Positionierelement (211) positioniert wird, wobei das ein Trigger-Anschlagelement (43) bildende Positionierelement (211) zum Auslösen des Betäubungsmittels (31) durch Anlage des Fischkopfes (90) von einer Anfangsposition in eine der Stoppposition entsprechende Endposition bewegt wird, in der ein Initiator (46) zum Auslösen des Betäubungsmittels (31) aktiviert wird, wobei ein die Größe jedes Fisches (9) repräsentierender Fischgrößenwert als Fischgrößen-Steuerwert automatisch erfasst wird und wobei das Positionierelement (211), das mit einem steuerbaren Fisch-Positionsstellglied (7) zum örtlichen Verstellen verbunden ist, nach Maßgabe der erfassten Fischgröße mittels des Fischgrößen-Steuerwerts selbsttätig in eine zugehörige genannte Anfangsposition bewegt und gesetzt wird, **dadurch gekennzeichnet, dass** das Fisch-Positionsstellglied (7) als Bestandteil einer Triggereinrichtung (4) betrieben wird, derart, dass an der Triggereinrichtung (4) Ortspositionen des Positionsstellgliedes (7), die jeweils zu der Anfangsposition gehören, verlagert und festgesetzt werden, so dass die Ortspositionen des Positionsstellgliedes (7) an der Triggereinrichtung (4) mittels des Fischgrößen-Steuerwerts gesteuert werden und dadurch die Triggereinrichtung (4) in Abhängigkeit von den an der Triggereinrichtung (4) verlagerten und festgesetzten Ortspositionen des Positionsstellgliedes (7) ausgelöst wird.

21. Verfahren nach Anspruch 20, **dadurch gekennzeichnet, dass** die Auslösebewegung des Positionierelements (211) von der Anfangsposition in die Endposition sowie eine Verstellbewegung des Positionierelements (211) zum gesteuerten Bewegen des Positionierelements (211) in die Anfangsposition längs einer gemeinsamen geraden Bewegungslinie durchgeführt werden.

22. Verfahren nach Anspruch 20 oder 21, **dadurch gekennzeichnet, dass** das Positionierelement (211) jedenfalls beim Erreichen der Endposition aus einer Basisposition von dem Fischkopf (90) zur Freigabe des Fisches (9) wegbewegt und nach Freigabe des bearbeiteten Fisches (9) in die Basisposition zurückbewegt wird.

23. Verfahren nach einem der Ansprüche 20 bis 22, **dadurch gekennzeichnet, dass** zum Durchführen des Verfahrens eine Fisch-Betäubungsvorrichtung (1) nach einem der Ansprüche 1 bis 14 verwendet wird.

24. Verfahren nach einem der Ansprüche 20 bis 23, **dadurch gekennzeichnet, dass** zum Durchführen des Verfahrens eine Triggerbaueinheit (8) nach einem der Ansprüche 15 bis 19 verwendet wird.

## Claims

1. Fish stunning apparatus (1), comprising
- a fish feed-in device (11), which is configured for conveying fish (9) head first,
- a fish receiving space (12) which is loadable by the fish feed-in device (11) with fish in the head first position,
- a fish positioning device (2) having a fish positioning means (21) engaging on the fish head (90) which for the purpose of stunning the fish (9) in the fish receiving space (12), defines a temporary stop position of the fish which is releasable after stunning for discharging the fish (9),
- a stunning means (31) which for stunning acts on the head-end region of the fish (9) in its temporary stop position in the fish receiving space (12),
- a trigger device (4) by means of which the temporary stop position is determinable and operation of the stunning means (31) can be activated for acting on the head-end fish region, and
- an apparatus control device (5) which for controlling operation is operatively connected to the fish positioning device (2), the stunning means (31) and the trigger device (4),
wherein the fish positioning device (2) is configured with a fish-size determining device (6) determining the fish size and with a fish-position actuating element (7) controllable by means of said fish-size determining device (6), which is connected to the fish positioning means (21) for local adjustment thereof, as a result of which any fish head (90) can be moved automatically, according to the size of the fish, into a consistent position in relation to the stunning means (31) to bring about the temporary fish stop position, **characterised in that** the fish position actuating element (7) forms a part of the trigger device (4), wherein the trigger device (4) can be activated, depending on local positions of the position actuating element (7) which are displaceable and fixable on said trigger device (4), said local positions being controllable by means of the fish size controlling.

2. Fish stunning apparatus according to claim 1, **characterised in that** a trigger body (41) of the trigger device (4), on which the position actuating element (7) is displaceably and fixably supported, is movably supported on a stationary mounting (42) of the fish stunning apparatus (1) for the activating movement along a defined activation path.

3. Fish stunning apparatus according to claim 1 or 2, **characterised in that** the trigger device (4) has a trigger abutment element (43) configured for abutment of a fish (9) which forms a positioning element (211) of the fish positioning means (21) and is arranged to be displaceable out of a starting position, wherein the trigger abutment element (43) is connected to the fish-position actuating element (7) for adjusting into different basic positions.

4. Fish stunning apparatus according to any one of claims 1 to 3, **characterised in that** the fish-position actuating element (7) is formed by an adjusting carriage element (71) which is slidingly movably supported and can be fixed in a specific sliding position on the trigger device (4) by the fish-size controlling.

5. Fish stunning apparatus according to any one of claims 1 to 4, **characterised in that** arranged on the trigger device (4) is a control actuator (75) forming a drive of the fish position actuating element (7), said control actuator being controllable for driving and fixing the fish-position actuating element (7) according to the size of the fish.

6. Fish stunning apparatus according to claim 5, **characterised in that** the control actuator (75) is formed by a controllable adjustment pressure piston cylinder (751).

7. Fish stunning apparatus according to any one of claims 1 to 6, **characterised in that** arranged on the trigger device (4) is an abutment actuator (45), which is configured to adjust a trigger abutment element (43) movably articulated on the fish-position actuating element (7), which trigger abutment element forms a fish positioning element (211) of the fish positioning means (21).

8. Fish stunning apparatus according to claim 7, **characterised in that** the abutment actuator (45) is formed by a controllable abutment pressure piston cylinder (451).

9. Fish stunning apparatus according to any one of claims 1 to 8, **characterised in that** arranged on the trigger device (4) is a double pressure piston cylinder (74) which has an adjustment pressure piston cylinder (751) that forms a control actuator (75) for driving and fixing the fish position actuating element (7), and which has an abutment pressure piston cylinder (451) which forms an abutment actuator (45) for driving a trigger abutment element (43) movably supported on the fish-position actuating element (7), said trigger abutment element forming a fish positioning element (211) of the fish positioning means (21).

10. Fish stunning apparatus according to claim 9, **characterised in that** a first piston rod (752) which belongs to the adjustment pressure piston cylinder (751) is hinged at a trigger body (41) of the trigger device (4) and that a second piston rod (452) which belongs to the abutment pressure piston cylinder (451) is hinged at the positioning element (211) of the fish positioning means (21), wherein a cylinder housing (741) of the double pressure piston cylinder (74) is displaceable and fixable along the first piston rod (752) and wherein the fish-position actuating element (7) for adjusting is in engagement with the cylinder housing (741).

11. Fish stunning apparatus according to any one of claims 7 to 10, **characterised in that** the abutment actuator (45) is designed as a controllable drive element connected to the apparatus control device (5), wherein the apparatus control device (5) is configured and switched in such a way that the trigger abutment element (43), on reaching the temporary fish stop position from a basic position, is moved in a direction away from the fish head (90) into a trigger release position and after release of the fish (9) is moved back into the basic position.

12. Fish stunning apparatus according to any one of claims 7 to 11, **characterised in that** the abutment actuator (45) is designed as a damping element, wherein the trigger abutment element (43), when a fish head (90) abuts it from a basic position, deflects in a direction away from the fish head (90) against a restoring force by which the trigger abutment element (43), after release of the fish (9), is moved back into the basic position.

13. Fish stunning apparatus according to any one of claims 1 to 12, **characterised in that** the fish-size determining device (6) has a measuring element which determines a fish size value in space and time before the fish (9) is conveyed into the fish receiving space (12).

14. Fish stunning apparatus according to any one of claims 1 to 13, **characterised in that** the apparatus control device (5) is configured to control the fish-position actuating element (7) with a programmable logic controller.

15. Trigger unit (8), configured for installation in a fish stunning apparatus (1) according to any one of claims 1 to 14, comprising a trigger body (41), which is designed with a mounting element (81) for displacing the trigger unit (8) along an activation path, a fish position actuating element (7), on which a fish positioning element (211) of a fish positioning means (21) is arranged which forms a trigger abutment element (43) for a fish head (90), and a controllable control actuator (75) for controlled moving and fixing of the fish positioning element (211), wherein the control actuator (75) is mounted on the trigger body (41) and has a controllable drive element which is in engagement therewith for controlled moving and fixing of the fish-position actuating element (7).

16. Trigger unit according to claim 15, **characterised in that** the control actuator (75) is formed by a controllable adjustment pressure piston cylinder (751).

17. Trigger unit according to claim 15 or 16, **characterised in that** the trigger unit (8) has an abutment actuator (45) which is configured to drive the fish positioning element (211) that is movably supported on the fish-position actuating element (7).

18. Trigger unit according to claim 16 or 17, **characterised in that** the trigger unit (8) has a double pressure piston cylinder (74), wherein an adjustment pressure piston cylinder (751) forms the control actuator (75) for driving and fixing the fish-position actuating element (7) and a controllable abutment pressure piston cylinder (451) for driving the positioning element (211) is connected thereto, wherein the positioning element (211) is movably supported on the fish-position actuating element (7).

19. Trigger unit according to claim 18, **characterised in that** a first piston rod (752) which belongs to the adjustment pressure piston cylinder (751) is hinged at a trigger body (41) and that a second piston rod (452) which belongs to the abutment pressure piston cylinder (451) is hinged at the positioning element (211) of the fish positioning means (21), wherein a cylinder housing (741) of the double pressure piston cylinder (74) is displaceable and fixable along the first piston rod (752) and wherein the fish-position actuating element (7) for adjusting is in engagement with the cylinder housing (755).

20. Method for activating a stunning means (31) for stunning a fish (9) acting on the head-end fish region, wherein the fish (9) is positioned with its head region under the stunning means (31) in a temporary stop position by abutment with a positioning element (211) engaging on the fish head (90), wherein the positioning element (211) which forms a trigger abutment element (43) for activating the stunning means (31) by abutment of the fish head (90) is moved from a starting position into an end position corresponding to the stop position, in which end position an initiator (46) is activated for actuating the stunning means (31), wherein a fish size value representing the size of any fish (9) is automatically determined as a fish size control value and wherein the positioning element (211), which is connected to a controllable fish-position actuating element (7) for local adjustment thereof, according to the determined size of the fish, is moved automatically using the fish size control value into an associated designated starting position and set, **characterised in that** the fish-position actuating element (7) is operated as part of the trigger device (4) in such a manner that on the trigger device (4) local positions of the fish-position actuating element (7), which belong to the starting positions, are displaced and fixed, such that the local positions of the fish-position actuating element (7) are controlled on the trigger device (4) by means of the fish size control value and thus the trigger device (4) is activated depending on the local positions of the position actuating element (7) which are displaceable and fixable on said trigger device (4).

21. Method according to claim 20, **characterised in that** the activating movement of the positioning element (211) from the starting position into the end position and an adjusting movement of the positioning element (211) for controlled moving of the positioning element (211) into the starting position is carried out along a common straight line of movement.

22. Method according to claim 20 or 21, **characterised in that** in any case the positioning element (211) on reaching the end position is moved out of a basic position away from the fish head (90) to release the fish (9) and after releasing the processed fish (9) is moved back into the basic position.

23. Method according to any one of claims 20 to 22, **characterised in that** a fish stunning apparatus (1) according to any one of claims 1 to 14 is used to carry out the method.

24. Method according to any one of claims 20 to 23, **characterised in that** a trigger unit (8) according to any one of claims 15 to 19 is used to carry out the method.

## Revendications

1. Dispositif pour étourdir des poissons (1), comprenant
- un dispositif d'alimentation en poisson (11), configuré pour transporter le poisson (9) tête la première,
- une cellule de réception de poisson (12) dans laquelle le poisson est susceptible d'être amené en position tête la première par le dispositif d'alimentation en poisson (11),
- une positionneuse de poisson (2) munie d'un moyen de positionnement de poisson (21) saisissant le poisson à la tête (90), lequel moyen de positionnement détermine, dans la cellule de réception du poisson (12), une position d'arrêt temporaire du poisson pour étourdir le poisson (9), laquelle est susceptible d'être débloquée pour délivrer le poisson (9) après étourdissement,
- un étourdisseur (31) qui, pour étourdir, agit sur la région de la tête du poisson (9) dans sa position d'arrêt temporaire dans la cellule de réception du poisson (12),
- une gâchette (4) qui permet de verrouiller la position d'arrêt temporaire et de déclencher l'opération de l'étourdisseur (31) pour qu'il agisse sur la région de la tête du poisson, et
- un organe de commande du dispositif (5) couplé activement à la positionneuse de poisson (2), à l'étourdisseur (31) et à la gâchette (4) pour la commande opérationnelle,
la positionneuse de poisson (2) étant configurée munie d'un dispositif de détection de taille de poisson (6) destiné à détecter la taille du poisson, ainsi que d'un vérin de position du poisson (7) susceptible d'être commandé au moyen du dispositif de détection de taille de poisson (6), lequel vérin est couplé au moyen de positionnement du poisson (21) pour l'ajustement géographique, ce qui permet à chaque tête de poisson (90), pour entraîner la position d'arrêt temporaire du poisson, d'être susceptible d'être transférée d'elle-même selon la taille du poisson dans une position uniforme par rapport à l'étourdisseur (31), **caractérisé en ce que** le vérin de position du poisson (7) constitue une composante de la gâchette (4), ladite gâchette (4) étant susceptible d'être déclenchée en fonction des positions géographiques du vérin de position (7), qui sont susceptibles d'être déplacées et verrouillées sur la gâchette (4), et d'être commandées au moyen de la commande de taille de poisson.

2. Dispositif pour étourdir des poissons selon la revendication 1, **caractérisé en ce qu**'un corps de gâchette (41) de la gâchette (4) sur laquelle le vérin de position (7) est disposé susceptible d'être déplacé et verrouillé, est disposé mobile, le long d'une piste de déclenchement définie, sur un endroit fixe (42) du dispositif pour étourdir des poissons (1) pour réaliser le mouvement de déclenchement.

3. Dispositif pour étourdir des poissons selon la revendication 1 ou 2, **caractérisé en ce que** la gâchette (4) présente un élément de butée de gâchette (43) configuré pour la mise en place d'un poisson (9), lequel élément constitue un élément de positionnement (211) du moyen de positionnement de poisson (21) et est agencé susceptible d'être déplacé à partir d'une position initiale, l'élément de butée de gâchette (43) étant relié au vérin de position de poisson (7) pour l'ajustement dans différentes positions de base.

4. Dispositif pour étourdir des poissons selon l'une quelconque des revendications 1 à 3, **caractérisé en ce que** le vérin de position de poisson (7) est constitué par un élément d'ajustement sur patins (71) qui est disposé sur la gâchette (4) de sorte à pouvoir être déplacé par glissement et verrouillé dans une position de glissement déterminée par la commande de taille de poisson.

5. Dispositif pour étourdir des poissons selon l'une quelconque des revendications 1 à 4, **caractérisé en ce qu**'est agencé, sur la gâchette (4), un actuateur de vérin (75) constituant un entraînement du vérin de position du poisson (7) qui est susceptible d'être commandé selon la taille du poisson pour entraîner et verrouiller le vérin de position de poisson (7).

6. Dispositif pour étourdir des poissons selon la revendication 5, **caractérisé en ce que** l'actuateur de vérin (75) est constitué d'un cylindre à piston de pression d'ajustement (751) susceptible d'être commandé.

7. Dispositif pour étourdir des poissons selon l'une quelconque des revendications 1 à 6, **caractérisé en ce qu**'est agencé sur la gâchette (4) un actuateur de butée (45) qui est configuré pour ajuster un élément de butée de gâchette (43), fixé par articulation et mobile au vérin de position de poisson (7), lequel élément de butée de gâchette constitue un élément de positionnement de poisson (211) du moyen de positionnement de poisson (21).

8. Dispositif pour étourdir des poissons selon la revendication 7, **caractérisé en ce que** l'actuateur de butée (45) est constitué d'un cylindre à piston de pression de butée (451) susceptible d'être commandé.

9. Dispositif pour étourdir des poissons selon l'une quelconque des revendications 1 à 8, **caractérisé en ce qu**'est agencé, sur la gâchette (4), un double cylindre à piston de pression (74) qui présente un cylindre à piston de pression d'ajustement (751), lequel constitue un actuateur de vérin (75) pour entraîner et verrouiller le vérin de position de poisson (7), et qui présente un cylindre à piston de pression de butée (451) qui constitue un actuateur de butée (45) pour entraîner un élément de butée de gâchette (43) disposé de manière mobile sur le vérin de position de poisson (7), lequel élément de butée de gâchette constitue un élément de positionnement de poisson (211) du moyen de positionnement de poisson (21).

10. Dispositif pour étourdir des poissons selon la revendication 9, **caractérisé en ce qu**'une première tige de piston (752) appartenant au cylindre à piston de pression d'ajustement (751) est fixée par articulation au corps de gâchette (41) de la gâchette (4), et qu'une deuxième tige de piston (452) appartenant au cylindre à piston de pression de butée (451) est fixée par articulation à l'élément de positionnement (211) du moyen de positionnement de poisson (21), un boîtier de cylindre (741) du double cylindre à piston de pression (74) est susceptible d'être déplacé et verrouillé le long d'une première tige de piston (752), et le vérin de position de poisson (7) se trouvant, pour l'ajustement, engagé avec le boîtier de cylindre (741).

11. Dispositif pour étourdir des poissons selon l'une quelconque des revendications 7 à 10, **caractérisé en ce que** l'actuateur de butée (45) est conçu sous forme d'élément d'entraînement susceptible d'être commandé et relié à l'organe de commande du dispositif (5), ledit organe de commande du dispositif (5) étant configuré et monté de telle sorte que l'élément de butée de gâchette (43) est, lorsque la position d'arrêt temporaire du poisson est atteinte, transféré d'une position de base dans une position de déblocage de gâchette dans le sens opposé de la tête du poisson (90), et renvoyé dans la position de base une fois que le poisson (9) a été débloqué.

12. Dispositif pour étourdir des poissons selon l'une quelconque des revendications 7 à 11, **caractérisé en ce que** l'actuateur de butée (45) est conçu sous forme d'élément amortisseur, l'élément de butée de gâchette (43) se dérobant, lorsqu'une tête de poisson (90) arrive en butée, à partir d'une position de base dans le sens opposé de la tête du poisson (90), contre une force de rappel par laquelle l'élément de butée de gâchette (43) est renvoyé dans la position de base au moment où le poisson (9) est débloqué.

13. Dispositif pour étourdir des poissons selon l'une quelconque des revendications 1 à 12, **caractérisé en ce que** le dispositif de détection de taille de poisson (6) présente un élément de mesure qui détecte une valeur pour la taille du poisson géographiquement et temporellement avant que le poisson (9) ne soit engagé dans la cellule de réception du poisson (12).

14. Dispositif pour étourdir des poissons selon l'une quelconque des revendications 1 à 13, **caractérisé en ce que** l'organe de commande du dispositif (5) est configuré pour commander le vérin de position de poisson (7) à l'aide d'une commande programmable à fonction logique.

15. Module de déclenchement (8) configuré pour être intégré dans un dispositif pour étourdir des poissons (1) selon l'une quelconque des revendications 1 à 14, comprenant un corps de gâchette (41) qui est conçu avec un élément de stockage (81) pour déplacer le module de déclenchement (8) le long d'une piste de déclenchement, un vérin de position de poisson (7) sur lequel est agencé un élément de positionnement de poisson (211) d'un moyen de positionnement de poisson (21) qui constitue un élément de butée de gâchette (43) pour une tête de poisson (90), et un actuateur de vérin (75) susceptible d'être commandé pour transférer et verrouiller par commande l'élément de positionnement de poisson (211), l'actuateur de vérin (75) étant disposé sur le corps de gâchette (41) et présentant un élément d'entraînement susceptible d'être commandé qui se trouve engagé avec le vérin de positionnement de poisson (7) pour transférer et verrouiller ce dernier par commande.

16. Module de déclenchement selon la revendication 15, **caractérisé en ce que** l'actuateur de vérin (75) est constitué d'un cylindre à piston de pression d'ajustement (751) susceptible d'être commandé.

17. Module de déclenchement selon la revendication 15 ou 16, **caractérisé en ce que** le module de déclenchement (8) présente un actuateur de butée (45) configuré pour entraîner l'élément de positionnement de poisson (211) qui est disposé mobile sur le vérin de position de poisson (7).

18. Module de déclenchement selon la revendication 16 ou 17, **caractérisé en ce que** le module de déclenchement (8) présente un double cylindre à piston de pression (74), un cylindre à piston de pression d'ajustement (751) constituant l'actuateur de vérin (75) pour entraîner et verrouiller le vérin de position de poisson (7) et un cylindre à piston de pression de butée (451) susceptible d'être commandé étant relié à l'élément de positionnement (211) pour l'entraîner, ledit élément de positionnement (211) étant disposé mobile sur le vérin de position de poisson (7).

19. Module de déclenchement selon la revendication 18, c**aractérisé en ce qu**'une première tige de piston (752) appartenant au cylindre à piston de pression d'ajustement (751) est fixée par articulation au corps de gâchette (41), et qu'une deuxième tige de piston (452) appartenant au cylindre à piston de pression de butée (451) est fixée par articulation à l'élément de positionnement (211) du moyen de positionnement de poisson (21), un boîtier de cylindre (741) du double cylindre à piston de pression (74) étant susceptible d'être déplacé et verrouillé le long de la première tige de piston (752), et le vérin de position de poisson (7) se trouvant, pour l'ajustement, engagé avec le boîtier de cylindre (741).

20. Procédé de déclenchement d'un étourdisseur (31) agissant sur la région de la tête du poisson pour étourdir un poisson (9), ledit poisson (9) étant positionné avec la région de sa tête sous l'étourdisseur (31) dans une position d'arrêt temporaire par mise en place sur un élément de positionnement (211) saisissant le poisson par la tête (90), ledit élément de positionnement (211) qui constitue un élément de butée de gâchette (43) étant transféré, pour déclencher l'étourdisseur (31) par mise en place de la tête du poisson (90), d'une position initiale dans une position finale correspondant à la position d'arrêt, position finale dans laquelle un initiateur (46) est activé pour déclencher l'étourdisseur (31), une valeur pour la taille de poisson représentant la taille de chaque poisson (9) étant détectée automatiquement en tant que valeur de commande de taille de poisson et l'élément de positionnement (211) qui est relié à un vérin de position de poisson (7) susceptible d'être commandé pour l'ajustage géographique, est transféré et mis de lui-même, selon la taille de poisson détectée, à l'aide de la valeur de commande de taille de poisson, dans une position initiale correspondante précitée, **caractérisé en ce que** le vérin de position de poisson (7) fonctionne en tant que composante d'une gâchette (4) de telle sorte que des positions géographiques du vérin de position (7) appartenant chacune à la position initiale sont déplacées et verrouillées sur la gâchette (4), de telle sorte que les positions géographiques du vérin de position (7) sur la gâchette (4) sont commandées à l'aide de la valeur de commande de taille de poisson et que cela déclenche la gâchette (4) en fonction des positions géographiques du vérin de position (7) déplacé et verrouillé sur la gâchette (4).

21. Procédé selon la revendication 20, **caractérisé en ce que** le mouvement de déclenchement de l'élément de positionnement (211) de la position initiale à la position finale ainsi qu'un mouvement d'ajustage de l'élément de positionnement (211) pour transférer l'élément de positionnement (211) de manière commandée dans la position initiale sont réalisés le long d'une ligne de transfert droite et commune.

22. Procédé selon la revendication 20 ou 21, **caractérisé en ce que** l'élément de positionnement (211) est, en tout cas, lorsque la position finale est atteinte à partir d'une position de base, éloigné de la tête du poisson (90) pour débloquer le poisson (9) et, après que le poisson (9) traité a été débloqué, renvoyé dans la position de base.

23. Procédé selon l'une quelconque des revendications 20 à 22, **caractérisé en ce qu**'un dispositif pour étourdir des poissons (1) selon l'une quelconque des revendications 1 à 14 est utilisé pour mettre en oeuvre ledit procédé.

24. Procédé selon l'une quelconque des revendications 20 à 23, **caractérisé en ce qu**'un module de déclenchement (8) selon l'une quelconque des revendications 15 à 19 est utilisé pour mettre en oeuvre ledit procédé.
